# EUROPEAN PATENT APPLICATION

(11) **EP 2 281 684 A1**
(43) Date of publication of application: **09.02.2011**
(21) Application number: 09754717.8
(22) Date of filing: 27.05.2009
(51) Int. Cl.: B32B 9/00, B32B 27/18, B01J 35/02, B05D 5/00, B05D 7/24, C09D 1/00, C09D 5/00, C09D 7/12, C09D 183/04

(54) **OBJECT WITH PHOTO-CATALYST COATING**

(30) Priority: 27.05.2008 JP 2008138190; 27.05.2008 JP 2008138191; 27.05.2008 JP 2008138192; 27.05.2008 JP 2008138193
(71) Applicant: Toto Ltd., Fukuoka 802-8601 (JP)
(72) Inventor: TERASAKI Hiroshi, Kitakyushu-shi Fukuoka 802-8601 (JP); OMOSHIKI Koji, Kitakyushu-shi Fukuoka 802-8601 (JP); HAYAKAWA Makoto, Kitakyushu-shi Fukuoka 802-8601 (JP); KAMESHIMA Junji, Kitakyushu-shi Fukuoka 802-8601 (JP); TAKAKI Yoji, Kitakyushu-shi Fukuoka 802-8601 (JP)
(74) Representative: Grünecker, Kinkeldey, Stockmair & Schwanhäusser Anwaltssozietät
(86) International application number: PCT/JP2009/059655
(87) International publication number: WO 2009/145209

(57) **Abstract**

A photocatalyst-coated body which exhibits ability to decompose harmful gases while preventing deterioration of the substrate for a long time period is provided. The photocatalyst-coated body comprises a substrate, an intermediate layer provided on the substrate and a photocatalyst layer provided on the intermediate layer. The photocatalyst layer comprises photocatalyst particles composed of metal oxide which is excited by ultraviolet light. The intermediate layer comprises a weather resistant resin and a hydroxyphenyl triazine compound.

## Description

### [Technical Field]

This invention relates to a photocatalyst-coated body comprising a photocatalyst layer excellent in high weather resistance, ability to decompose harmful gases, light resistance and various coated film performances and especially suitable for use in exterior and interior materials and the like for buildings and the like.

### [Background Art]

In recent years, a photocatalyst such as titanium oxide is being utilized for many usages such as exterior and interior materials and the like for buildings. As for the exterior usage, it becomes possible to impart a function of decomposing harmful substances such as NOx and SOx utilizing light energy by applying the photocatalyst on the substrate surface. As for the interior usage, it also becomes possible to impart the function of decomposing harmful substances such as VOC utilizing light energy.

When such a photocatalyst-coated body is to be obtained, an intermediate layer is provided between the substrate base and the photocatalyst for the purpose of adhesion and/or prevention of deterioration of the substrate surface due to the photocatalyst. As the technique to obtain such a photocatalyst-coated body coated with the photocatalyst, the followings are known.

A technique to provide an intermediate layer of a silicone-modified resin and the like between the base substrate and the photocatalyst for the purpose of adhesion and/or prevention of deterioration of the substrate surface due to the photocatalyst is known (e.g., see WO97/00134).

In addition, a technique to provide an intermediate layer between the base substrate and the photocatalyst and admix an ultraviolet absorbing substance such as an inorganic semiconductor and an organic compound based on salicylic acid, benzophenone, benzotriazole, cyanoacrylate, and the like in the intermediate layer to prevent deterioration of the substrate surface is also known (e.g., see Japanese Patent Laid-Open Publication No. 2006-116461).

A technique to obtain a photocatalyst body by forming a coated film comprising silica sol as a binder component of the photocatalyst layer and photocatalytic titanium dioxide on the substrate is also known (e.g., see Japanese Patent Laid-Open Publication No. Hll-169727). In this technique, the amount of silica sol to be added is claimed to be 20 to 200 weight parts in terms of SiO₂ relative to titanium dioxide, and thus the content of titanium dioxide is large. In addition, particle diameter of silica sol is as small as 0.1 to 10 nm.

In addition, a technique to add a binder component such as hydrolyzable silicone and the like to the photocatalyst for the purpose of enhancing the durability of the coated body is known (see Japanese Patent Laid-Open Publication No. 2001-212510 and Japanese Patent Laid-Open Publication No. 2002-137322).

Further, a technique to add copper to the photocatalyst in order to improve the antibacterial and antifungal performance is also known (see Japanese Patent Laid-Open Publication No. H6-65012).

### [Summary of Invention]

An attempt to increase the amount of the photocatalyst comprised in the photocatalyst layer has been done conventionally in order to obtain sufficient photocatalytic activity. In this case, however, there was concern about occurrence of a problem that the substrate may be deteriorated by the photocatalyst. In addition, if the amount of the photocatalyst is simply decreased, it becomes difficult to obtain sufficient photocatalytic activity and concern occurs about deterioration of the substrate and the like by ultraviolet light because of weakening of the ultraviolet shielding effect in the photocatalyst layer.

With the view of the aforementioned circumstances, an object of the present invention is to provide a photocatalyst-coated body which exhibits ability to decompose harmful gases while preventing deterioration of the substrate for a long time period.

That is, the photocatalyst-coated body according to the present invention is a photocatalyst-coated body comprising a substrate, an intermediate layer provided on the substrate and a photocatalyst layer provided on the intermediate layer,
the photocatalyst layer comprising photocatalyst particles composed of metal oxide which is excited by ultraviolet light, and
the intermediate layer comprising a weather-resistant resin and a hydroxyphenyl triazine compound.

### [Description of Embodiments]

### Photocatalyst-coated body

The photocatalyst-coated body according to the present invention comprises a substrate, an intermediate layer provided on the substrate and a photocatalyst layer provided on the intermediate layer. The photocatalyst layer comprises photocatalyst particles composed of metal oxide which is excited by ultraviolet light. The intermediate layer comprises a weather-resistant resin and a hydroxyphenyl triazine compound. That is, the photocatalyst-coated body according to the present invention has photocatalyst particles composed of inorganic oxide having a capability of absorbing ultraviolet light and excellent in light resistance in the photocatalyst layer. Therefore, the photocatalyst-coated body has a good ultraviolet absorption capability even when added in a small amount and is chemically stable, resulting in reduced deterioration of the intermediate layer and the substrate even when used in the hot and humid tropical zone and the like. In addition, the deterioration of the intermediate layer and the substrate due to the active oxygen generated in association with the photocatalytic oxidation action is also suppressed. Therefore, it becomes possible to effectively exhibit the decomposition function of the photocatalyst and to improve the weather resistance of the substrate and the intermediate layer to the extent that they can endure the long term usage in the tropical zone and the like, since the intermediate layer comprises the hydroxyphenyl triazine compound which can endure the long term usage in the tropical zone and the like.

According to a preferred embodiment of the present invention, the photocatalyst layer of the present invention may be formed by applying the coating liquid comprising photocatalyst sol comprising photocatalyst particles composed of metal oxide which is excited by ultraviolet light and an amine and then drying. Accordingly, it is possible to provide a photocatalyst-coated body which exhibits ability to decompose harmful gases without discoloration at the time of addition or during usage even when amine-dispersed photocatalyst sol is used, while preventing deterioration of the substrate for a long time period. That is, although an ultraviolet absorbing agent has been used conventionally in order to prevent deterioration of the substrate and the like due to the aforementioned weakening of ultraviolet shielding effect, there was a problem that addition of a large amount was required to obtain sufficient effect, which caused discoloration, devitrification and the like, if the inorganic ultraviolet absorbing agent was used. In addition, if an organic ultraviolet absorbing agent such as a triazole compound was used, there was a problem of discoloration during usage when it was used in combination with amine-dispersed photocatalyst sol having a good dispersibility. This embodiment can also solve these problems.

According to a preferred embodiment of the present invention, the photocatalyst layer of the present invention may comprise the photocatalyst particles composed of metal oxide which is excited by ultraviolet light and copper element in ionic state. Accordingly, it is possible to provide a photocatalyst-coated body which does not cause a problem of discoloration at the time of addition or during usage, while exhibiting an excellent antifungal performance and preventing deterioration of the substrate for a long time period. That is, although an ultraviolet absorbing agent has been used conventionally in order to prevent deterioration of the substrate and the like due to the aforementioned weakening of ultraviolet shielding effect, there was a problem that addition of a large amount was required to obtain sufficient effect, which caused discoloration, devitrification and the like, if the inorganic ultraviolet absorbing agent was used. In addition, if an organic ultraviolet absorbing agent such as a triazole compound was used, there was a problem of discoloration during usage especially when copper was added in order to enhance the antifungal activity of the photocatalyst. This embodiment can also solve these problems. In this embodiment, the valence of the copper element in the ionic state may be +1 or +2. The amount of the added copper element comprised in the photocatalyst layer is preferably 0.5 mass parts to 5 mass % in terms of CuO relative to the photocatalyst particles.

According to a preferred embodiment of the present invention, the amount of the photocatalyst particles comprised in the photocatalyst layer is more than 1 mass % and less than 20 mass %, more preferably more than 1 mass % and less than 5 mass %. By using the aforementioned range, it becomes possible to exhibit the decomposition function of the photocatalyst effectively, to improve the weather resistance of the substrate and the intermediate layer to the extent that they can endure the long term usage in the tropical zone and the like, and to prevent deterioration of the substrate and the intermediate layer due to the photocatalyst. That is, the ultraviolet absorbing function of the photocatalyst layer and the excellent photocatalytic function under irradiation with the sunlight in the temperate zone and the subarctic zone, as well as the sufficient weather resistance can be simultaneously exhibited.

According to a preferred embodiment of the present invention, a hindered amine compound is comprised. By having a hindered amine compound comprised as a light stabilizer, the absorbing performance of the hydroxyphenyl triazine compound at the short wavelength of ultraviolet light less than 380 nm is stabilized.

According to a preferred embodiment of the present invention, the weather resistant resin is a silicone-modified resin. By using a silicone-modified resin, the intermediate layer can simultaneously exhibit the weather resistance and the crack resistance.

According to a preferred embodiment of the present invention, the silicon content in the silicone-modified resin is 0.2 mass % or more and less than 16.5 mass %, more preferably 6.5 mass % or more and less than 16.5 mass %, relative to the solid content of the silicone-modified resin. Accordingly, it is possible to improve the weather resistance against ultraviolet light in the intermediate layer and to sufficiently prevent erosion by the photocatalyst, as well as to prevent occurrence of cracks. Here, the amount of silicon atom comprised in the silicone-modified resin can be measured by chemical analysis with X-ray photoelectron spectrometer (XPS).

According to a preferred embodiment of the present invention, the amount of the hydroxyphenyl triazine compound is 0.1 mass % or more and less than 10 mass % relative to the intermediate layer. By using this range, it becomes possible to sufficiently exhibit the ultraviolet light absorbing performance without discoloration of the intermediate layer.

The hydroxyphenyl triazine compound used in the present invention is hydroxyphenyl triazine and/or a derivative of hydroxyphenyl triazine having a basic backbone represented by the following general formula (chemical formula 1) and a commercially available ultraviolet absorbing agent based on hydroxyphenyl triazine can be preferably utilized.

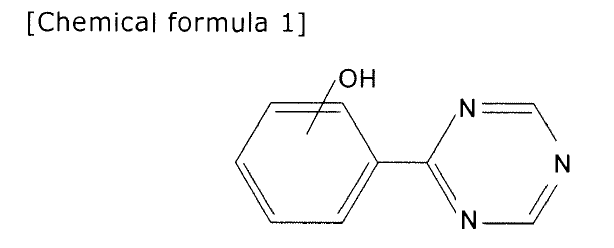

According to a preferred embodiment of the present invention, the photocatalyst layer has air permeability. Accordingly, the contact chance of the photocatalyst particles and harmful gases increases and excellent photocatalytic decomposition function is exhibited.

According to a preferred embodiment of the present invention, the photocatalyst layer comprises inorganic oxide particles besides the photocatalyst particles. By having particulate inorganic oxide as the main component of the binder component besides the photocatalyst particles, sufficient air permeability is secured in the photocatalyst layer and the contact chance of the photocatalyst particles and harmful gases is increased, resulting in exhibiting excellent photocatalytic decomposition function.

According to a preferred embodiment of the present invention, the photocatalyst layer comprises more than 1 mass part and less than 20 mass parts of the photocatalyst particles, more than 70 mass parts and less than 99 mass parts of the inorganic oxide particles, and as an optional component, 0 mass part or more and less than 10 mass parts of at least one kind selected from the group consisting of a condensation-polymerization product of hydrolyzable silicone and a condensation-polymerization product of hydrolyzed organometallic compound, so that the total amount of the photocatalyst particles, the inorganic oxide particles, and the optional component in terms of the oxide is 100 mass parts. Accordingly, the contact chance of the photocatalyst particles and harmful gases increases and the excellent photocatalytic decomposition function is effectively exhibited. Furthermore, it becomes possible to improve the weather resistance of the substrate and the intermediate layer to the extent that they can endure the long-term usage in the tropical zone and the like, and to prevent deterioration of the substrate and the intermediate layer due to the photocatalyst.

According to a preferred embodiment of the present invention, the photocatalyst layer comprises more than 1 mass part and less than 5 mass parts of the photocatalyst particles, more than 85 mass parts and less than 99 mass parts of the inorganic oxide particles, and as an optional component, 0 mass part or more and less than 10 mass parts of at least one kind selected from the group consisting of a condensation-polymerization product of hydrolyzable silicone and a condensation-polymerization product of hydrolyzed organometallic compound, so that the total amount of the photocatalyst particles, the inorganic oxide particles, and the optional component in terms of the oxide is 100 mass parts. Accordingly, the contact chance of the photocatalyst particles and harmful gases increases and the excellent photocatalytic decomposition function is effectively exhibited. Furthermore, it becomes possible to improve the weather resistance of the substrate and the intermediate layer to the extent that they can endure the long-term usage in the tropical zone and the like, and to prevent deterioration of the substrate and the intermediate layer due to the photocatalyst.

### Photocatalyst layer

The photocatalyst layer of the present invention comprises photocatalyst particles composed of metal oxide which is excited by ultraviolet light.

As the photocatalyst particles, particles of metal oxide such as anatase-type titanium oxide, rutile-type titanium oxide, brookite-type titanium oxide, tin oxide, zinc oxide, strontium titanate, tungsten oxide, and cerium oxide are preferably utilizable.

According to a preferred embodiment of the present invention, it is preferable that the photocatalyst particles have an average particle diameter of 10 nm or more and less than 100 nm, more preferably 10 nm or more and 60 nm or less. Note that the average particle diameter is calculated as a number average value obtained by measuring the lengths of arbitrary 100 particles located within a visual field of a scanning microscope at a magnification of 200,000.

Although the most preferred shape of the particle is a perfect sphere, approximate round or elliptical particle may be acceptable, in which case the length of the particle is approximately calculated as ((major axis + minor axis)/2). In this range, weather resistance, ability to decompose harmful gases, and various desired coated film characteristics (transparency, coated film strength, etc.) are effectively exhibited.

In addition, it is more preferable that the linear transmittance of the photocatalyst layer of 90% or more, more preferably 95% or more, at the wavelength of 550 nm is secured. Accordingly, it becomes possible to express the color and design of the substrate without damage. In addition, the transparency is not impaired even if glass, plastics and the like which have high transparency are coated.

According to a preferred embodiment of the present invention, in order to express higher photocatalytic performance, at least one metal and/or metal compound composed of the metal selected from the group consisting of vanadium, iron, cobalt, nickel, palladium, zinc, ruthenium, rhodium, copper, silver, platinum and gold may be added to the photocatalyst layer or the photocatalyst coating liquid to be applied on the intermediate layer in order to form the photocatalyst layer. The addition may be done by any method including a method to mix the metal or metal compound to the coating liquid followed by dissolution or dispersion, a method to have the metal or metal compound supported on the photocatalyst layer or the photocatalyst particles, and the like.

In the present invention, it is preferable that inorganic oxide particles are comprised in the photocatalyst layer. The inorganic oxide particles are not particularly limited as long as they are able to form a layer with the photocatalyst particles and any kind of the inorganic oxide particles may be used. Examples of such inorganic oxide particles include the particles of single oxide such as silica, alumina, zirconia, ceria, yttria, tin oxide, iron oxide, manganese oxide, nickel oxide, cobalt oxide, hafnia, and the like; and the particles of complex oxide such as barium titanate, calcium silicate, aluminum borate, potassium titanate, and the like, and more preferably silica particles. These inorganic oxide particles are preferably in the form of aqueous colloid with water as the dispersant; or in the form of organosol in which the particles are colloidally dispersed in a hydrophilic solvent such as ethyl alcohol, isopropyl alcohol, or ethylene glycol; especially preferable is colloidal silica.

The aforementioned inorganic oxide particles have an average particle diameter of more than 5 nm and 20 nm or less, preferably 10 nm or more and 20 nm or less. Note that the average particle diameter is calculated as a number average value obtained by measuring the lengths of arbitrary 100 particles located within a visual field of a scanning microscope at a magnification of 200,000. Although the most preferred shape of the particle is a perfect sphere, approximate round or elliptic shape may be acceptable, in which case the length of the particle is approximately calculated as ((major axis + minor axis)/2). In this range, weather resistance, ability to decompose harmful gases, and various desired coated film characteristics (transparency, coated film strength, etc.) are effectively exhibited. Above all not only the photocatalyst layer transparent and good in adhesiveness can be obtained, but also the film strong enough against the sliding abrasion can be obtained.

It is preferable that the photocatalyst layer of the present invention does not substantially comprise, and more preferably, is completely free of, the condensation-polymerization product of the hydrolyzable silicone in order to secure the air permeability. As used herein, the hydrolyzable silicone is the generic designation of organosiloxane having an alkoxy group and/or its partially hydrolyzed condensation product. The content of the condensation-polymerization product of the hydrolyzable silicone is preferably 0 mass part or more and less than 10 mass parts, more preferably 5 mass parts or less, and most preferably 0 mass part, in terms of silica, relative to the total amount of 100 mass parts of the photocatalyst particles, inorganic oxide particles and the condensation-polymerization product of the hydrolyzable silicone. As the hydrolyzable silicone, a silicone compound having a monomer unit of bifunctional to tetrafunctional silane is often used. For example, ethyl silicate, methyl silicate, alkyl group-containing silicone, phenyl group-containing silicone, and the like can be preferably utilized.

It is preferable that the photocatalyst layer of the present invention does not substantially comprise, and more preferably, is completely free of, the condensation-polymerization product of the hydrolyzed organometallic compound in order to secure the air permeability. As used herein, the organometallic compound is metal alkoxide, metal organic complex and the like comprising metal element such as titanium, zirconium, aluminum and the like. The content of the condensation-polymerization product of the hydrolyzed organometallic compound is preferably 0 mass part or more and less than 10 mass parts, more preferably less than 5 mass parts, most preferably 0 mass part, in terms of metal oxide, relative to the total amount of 100 mass parts of the photocatalyst particles, inorganic oxide particles and the hydrolyzable silicone.

The photocatalyst layer of the present invention comprises at least one kind selected from the group consisting of the condensation-polymerization product of the hydrolyzable silicone and the hydrolyzed product of the organometallic compound as an optional component. It is preferable that the content of the optional component is 0 mass part or more and less than 10 mass parts, more preferably less than 5 mass parts, most preferably 0 mass part, relative to the total amount of 100 mass parts of the photocatalyst particles, inorganic oxide particles and these optional components in terms of oxide.

It is preferable that the photocatalyst layer has a film thickness of 0.1 µm or more and 5 µm or less; more preferably the lower limit is 0.5 µm or more; further more preferably the lower limit is 1 µm or more. The range of further preferred film thickness is 0.5 µm or more and 3 µm or less; further more preferred range is 1.0 µm or more and 2 µm or less. Within this range, the ability to decompose harmful gases is improved, because the photocatalyst particles, the content of which is lower than the inorganic oxide particles, can be increased in the direction of the film thickness. Furthermore, excellent characteristics in the transparency are also attained.

In addition, the content mentioned in the above sections of "photocatalyst layer" and "photocatalyst-coated body" can be arbitrarily combined.

### Method for Producing the Photocatalyst Layer

The photocatalyst-coated body of the present invention can be easily produced by applying the photocatalyst coating liquid onto the substrate which has an intermediate layer. As the application method of the photocatalyst layer, commonly and widely performed methods such as brushing, roller coating, spraying, a roll coater, a flow coater, dip coating, flow coating, screen printing and the like using the aforementioned liquid agent can be utilized. After applying the coating liquid onto the substrate, it may be dried at ambient temperature or by heating as needed.

The photocatalyst coating liquid substantially comprises photocatalyst particles composed of metal oxide which is excited by ultraviolet light and a solvent. As the "photocatalyst particles", those mentioned in the above sections of "photocatalyst layer" and "photocatalyst-coated body" can be preferably utilized. In addition, "inorganic oxide particles", "hydrolyzable silicone", and "organometallic compound" may be comprised, for which those mentioned in the above sections of "photocatalyst layer" and "photocatalyst-coated body" can also be preferably utilized.

In an embodiment in which the photocatalyst layer is formed by applying the coating liquid comprising the photocatalyst sol comprising the photocatalyst particles and an amine and drying, the photocatalyst sol is basically comprised of photocatalyst particles made of metal oxide, an amine, and a solvent. As the amine comprised in the photocatalyst sol, quarternary ammonium, tertiary amine such as triethanolamine, triethylamine and the like, secondary amine such as diethanolamine, diethylamine and the like, and the like can be preferably utilized.

In an embodiment in which the photocatalyst layer comprises photocatalyst particles and copper element in ionic state, the photocatalyst sol basically composed of photocatalyst particles made of metal oxide, copper element in ionic state, an amine, and a solvent is used as the photocatalyst coating liquid.

As the solvent for the photocatalyst coating liquid, any solvent which can suitably disperse the aforementioned components may be used. The solvent may be water and/or an organic solvent. In addition, although the solid concentration of the photocatalyst coating liquid is not particularly limited, 1 to 10 mass % is preferable because of easiness of applying. In addition, the constituents of the photocatalyst coating composition can be analyzed by separating the coating liquid into the particle component and the filtrate by ultrafiltration, followed by individual analysis with infrared spectroscopic analysis, gel permeation chromatography, fluorescent X-ray analysis and the like, and analyzing the spectrum.

The photocatalyst coating liquid may comprise a surfactant as an optional component. The surfactant used in the present invention may be comprised in the photocatalyst layer in an amount of 0 mass part or more and less than 10 mass parts, preferably 0 mass part or more and less than 8 mass parts, more preferably 0 or more and 6 mass parts or less, relative to the total amount of 100 mass parts of the photocatalyst particles, the inorganic oxide particles and the hydrolyzable silicone. One of the effects of the surfactant is leveling property to the substrate. The amount of the surfactant may be determined in the aforementioned range as needed depending on the combination of the coating liquid and the substrate. The lower limit in this case may be 0.1 mass part. Although the surfactant is an effective component to improve the wettability of the photocatalyst coating liquid, it is equivalent to the inevitable impurity which no longer contributes to the effect of the photocatalyst-coated body of the present invention in the photocatalyst layer formed after applying. Therefore, the surfactant may be used in the aforementioned range of the content depending on the wettability required for the photocatalyst coating liquid, and may virtually or definitely not be comprised for the application where the wettability is not an issue. Although the surfactant to be used may be selected as needed considering the dispersion stability of the photocatalyst and the inorganic oxide particles and the wettability when applied on the intermediate layer, a nonionic surfactant is preferable. More preferred examples include ether-type nonionic surfactant, ester-type nonionic surfactant, polyalkylene glycol-type nonionic surfactant, fluorine-type surfactant, and silicone-type nonionic surfactant.

### Intermediate Layer

The intermediate layer of the present invention comprises a weather resistant resin and a hydroxyphenyl triazine compound as essential components.

The weather resistant resin is not particularly limited as long as it has good compatibility with the ultraviolet absorbing agent, has adhesiveness with the substrate and the photocatalyst, and is able to prevent deterioration of the surface of the intermediate layer due to the photocatalyst. A silicone-modified resin such as a silicone-modified acrylic resin, a silicone-modified epoxy resin, a silicone-modified urethane resin, a silicone-modified polyester and the like which includes polysiloxane in the resin is preferable. When applied to the architectural materials for exterior, a silicone-modified acrylic resin is more preferable in view of weather resistance. In the silicone-modified acrylic resin, it is more preferable to use the mixture of the two solutions of a silicone-modified acrylic resin having a carboxyl group and a silicone resin having an epoxy group in view of improving the strength of the coated film.

Although the dried film thickness of the intermediate layer is not particularly limited, it is preferably 1 µm to 50 µm, more preferably 1 µm to 20 µm, most preferably 1 µm to 10 µm. In addition, it is desirable that the film thickness of the intermediate layer is larger than the film thickness of the photocatalyst layer. Accordingly, the hydroxyphenyl triazine compound, which has a good heat resistance, can be prevented from deterioration due to the photocatalytic action; high durability can be exhibited even used under the severe climate conditions in hot and humid tropical zone and the like; and sufficient photocatalytic activity is attained.

It is also possible to add a body pigment, a color pigment, an antialgal agent and the like to the intermediate layer as an optional component. As the body pigment, for example, titanium oxide whisker, calcium carbonate whisker, aluminum borate whisker, potassium titanate whisker, mica, talc and the like can be preferably utilized. As the color pigment, for example, an inorganic color pigment such as titanium oxide white, zinc oxide white, iron oxide, carbon black, spinel green, Bengala, cobalt aluminate, ultramarine blue and the like and an organic color pigment such as phthalocyanine series, benzimidazolone series, isoindolinone series, azo series, anthraquinone series, quinophthalone series, anthrapyridinine series, quinacridone series, toluidine series, pyrathrone series, perylene series and the like can be preferably utilized. As the antialgal agent, an organic antifungal agent, which has good compatibility with the resin component of the intermediate layer, can be preferably utilized. For example, an organic nitrogen and sulfur compound, a pyrithione compound, an organic iodine compound, a triazine compound, an isothiazoline compound, an imidazole compound, a pyridine compound, a nitrile compound, a thiocarbamate compound, a thiazole compound, a disulfide compound and the like can be preferably utilized.

In addition, the content mentioned in the above sections of "intermediate layer", "photocatalyst-coated body" and "photocatalyst layer" can be arbitrarily combined.

### Method for Producing the Intermediate Layer

The intermediate layer can be easily produced by applying the intermediate layer coating liquid onto the substrate. As the application method of the intermediate layer, commonly and widely performed methods such as brushing, roller coating, spraying, a roll coater, a flow coater, dip coating, flow coating, screen printing and the like using the aforementioned liquid agent can be utilized. After applying the coating liquid onto the substrate, it may be dried at ambient temperature or by heating as needed.

The intermediate layer coating liquid substantially comprises the weather resistant resin or its precursor before the polymerization and the hydroxyphenyl triazine compound.

As "weather resistant resin", those mentioned in the above sections of "photocatalyst layer" and "photocatalyst-coated body" can be preferably utilized.

As the solvent for the intermediate layer coating liquid, any solvent which can suitably disperse the aforementioned components may be used. The solvent may be water and/or an organic solvent. In addition, although the solid concentration of the liquid agent for coating the intermediate layer is not particularly limited, 10 to 20 mass % is preferable because of easiness of applying. In addition, the constituent of the intermediate layer coating liquid can be analyzed by infrared spectroscopic analysis as for the resin component.

The intermediate layer coating liquid may be admixed with "body pigment", "color pigment", "antialgal agent" and the like, besides those mentioned above. Those mentioned in the above section of "intermediate layer" can be preferably utilized.

The intermediate layer coating liquid may comprise additives for paint such as pigment dispersant, antifoaming agent, antioxidant and the like and other components usually comprised in a paint besides those mentioned above. In addition, a matt finishing agent such as silica fine particles may also be comprised.

### Substrate

The substrate used for the present invention may be various materials, inorganic materials or organic materials, as long as the intermediate layer can be formed on them and their shape is not limited. Preferred examples of the substrate in view of the material include metals, ceramics, glass, plastics, rubber, stones, cements, concretes, fibers, fabrics, wood, paper, combinations thereof, laminates thereof, and a material having at least one coated layer on its surface. Preferred examples of the substrate from a standpoint of application include building materials, exterior and interior materials of buildings, window frames, window panes, structural members, exterior and coating of vehicles, exterior coating of machines and articles, dust-proof covers and coating, traffic signs, various types of displays, advertising pillars, road sound barriers, railway sound barriers, bridges, exterior and coating of crash barriers, inner walls and coating for tunnels, insulators, solar cell covers, heat-collecting covers for solar water heaters, plastic greenhouses, vehicle lamp covers, outdoor lighting apparatuses, racks, bathroom materials, kitchen panels, sinks, cooking ranges, ventilating fans, air conditioners, filters, toilet bowls, bathtubs and film, sheet, seal, etc, to be adhered on the surfaces of the aforementioned articles.

Especially, it is particularly preferable that the photocatalyst-coated body of the present invention is used in the utilization form in which it is exposed to the sunlight and the photocatalyst is excited by the ultraviolet light included in the sunlight, resulting in the occurrence of the photooxidation action such as gas decomposition, antifungal effect and the like and in which the problem of deterioration of the intermediate layer and/or the substrate due to the ultraviolet light appears to occur. As such a usage, building materials, exterior materials of buildings, window frames, window panes, structural members, exterior and coating of vehicles, exterior coating of machines and articles, traffic signs, advertising pillars, advertising displays, road sound barriers, railway sound barriers, bridges, exterior and coating of crash barriers, inner walls and coating for tunnels, insulators, solar cell covers, heat-collecting covers for solar water heaters, plastic greenhouses, vehicle lamp covers, outdoor lighting apparatuses, pavement for roads and the like are exemplified.

### [Examples]

The present invention will be specifically illustrated based on the following examples. However, the present invention is not limited to these examples.

### Example A1 to A6

Preparation and evaluation of the coated body samples were carried out as follows.

### Example A1:

As the substrate, a polycarbonate resin substrate was prepared. The intermediate layer was formed on the substrate as below. That is, the substrate was spray-coated with the intermediate layer coating liquid comprising the silicone-modified acrylic resin dispersion, the silicon atom content of which was 10 mass % relative to the solid content of the silicone-modified resin, admixed with 1 mass % of the hydroxyphenyl triazine compound and 1 mass % of the hindered amine photostabilizer relative to the solid content of the dispersion, and dried at 120°C to form the intermediate layer with a thickness of 10 µm. The photocatalyst layer was formed on the resultant intermediate layer as below. That is, an anatase-type titanium oxide water dispersion (average particle diameter: about 50 nm, basic), water dispersed colloidal silica (average particle diameter: about 14 nm, basic) and a polyether modified silicone-based surfactant were mixed to obtain the photocatalyst coating liquid. The total solid concentration of the photocatalyst and the inorganic oxide in the photocatalyst coating liquid was 5.5 mass %. The aforementioned intermediate layer-coated body which had been heated beforehand was spray-coated with the resultant photocatalyst coating liquid and dried at 120°C. Titanium oxide in the resultant photocatalyst layer was 2 mass parts, silica was 98 mass parts, and the surfactant was 6 mass parts. In addition, the film thickness of the photocatalyst layer was 0.5 µm.

### Example A2:

The coated body sample was prepared in the same way as in Example A1, except that the amount of titanium oxide was 15 mass parts and the amount of silica was 85 mass parts in the photocatalyst layer.

### Example A3:

The coated body sample was prepared in the same way as in Example A1, except that the amount of titanium oxide was 4 mass parts and the amount of silica was 96 mass parts in the photocatalyst layer.

### Example A4:

The coated body sample was prepared in the same way as in Example A1, except that the amount of titanium oxide was 4.5 mass parts and the amount of silica was 95.5 mass parts in the photocatalyst layer.

### Example A5:

The coated body sample was prepared in the same way as in Example A1, except that the film thickness of the photocatalyst layer was 1.5 µm.

### Example A6 (Comparative):

The coated body sample was prepared in the same way as in Example A1, except that a triazole compound was used instead of the hydroxyphenyl triazine compound in the intermediate layer.

(1) Photocatalytic decomposition activity test and (2) long term accelerated deterioration test were carried out for each sample obtained in Examples A1 to A6. (1) was evaluated by measuring Q_{NOX} (the amount of nitrogen oxide removed by the sample piece) obtained by the test method described in JIS R 1701-1 (2004), "Test method for air purification performance of photocatalytic materials-Part 1: Removal of nitric oxide". (2) was carried out using an exposure rack defined in JIS K 5600-7-6 in Miyakojima Island (Okinawa Prefecture, Japan), at an inclination angle of 20° from the horizon and facing south, and the exterior appearance of the sample was visually evaluated after 6 month outdoor exposure.
   The evaluation results are shown in Table 1. In addition, the evaluation criteria are as follows.

### (1) Decomposition activity

A: Q_{NOX} exceeds 2 times the standard of the Photocatalysis Industry Association of Japan (0.5 µmol).
B: Q_{NOX} is 1 to 2 times the standard of the Photocatalysis Industry Association of Japan.
C: Q_{NOX} does not satisfy the standard of the Photocatalysis Industry Association of Japan.

### (2) Long-term accelerated deterioration test (Deqiree of prevention of discoloration of the substrate)

A: No problem with visual and electron microscope observations.
B: Although efflorescence cannot be appreciated by visual observation by usual measurer, crack is appreciable by electron microscope.
C: Efflorescence is clearly observable by visual observation.

**[Table 1]**

| Sample | Decomposition activity | Degree of prevention of discoloration of the substrate |
|---|---|---|
| Example A1 | B | A |
| Example A2 | A | B |
| Example A3 | B | A |
| Example A4 | B | A |
| Example A5 | A | A |
| Example A6 (Comparative) | B | C |

### Examples B1 to B5

Preparation and evaluation of the coated body samples were carried out as follows.

### Example B1:

As the substrate, a glass substrate was prepared. The intermediate layer was formed on the substrate as below. That is, the substrate was spray-coated with the intermediate layer coating liquid comprising the silicone-modified acrylic resin dispersion, the silicon atom content of which was 10 mass % relative to the solid content of the silicone-modified resin, admixed with 1 mass % of the hydroxyphenyl triazine compound and 1 mass % of the hindered amine photostabilizer relative to the solid content of the dispersion, and dried at 120°C to form the intermediate layer with a thickness of 10 µm. The photocatalyst layer was formed on the resultant intermediate layer as below. That is, an anatase-type titanium oxide water dispersion (average particle diameter: about 50 nm, dispersant: diethylamine), water dispersed colloidal silica (average particle diameter: about 30 nm, basic) and a polyether modified silicone-based surfactant were mixed to obtain the photocatalyst coating liquid. The total solid concentration of the photocatalyst and the inorganic oxide in the photocatalyst coating liquid was 5.5 mass %. The aforementioned intermediate layer-coated body which had been heated beforehand was spray-coated with the resultant photocatalyst coating liquid and dried at 120°C. Titanium oxide in the resultant photocatalyst layer was 2 mass parts, silica was 98 mass parts, and the surfactant was 6 mass parts. In addition, the film thickness of the photocatalyst layer was 0.5 µm.

### Example B2:

The coated body sample was prepared in the same way as in Example B1, except that the amount of titanium oxide was 15 mass parts and the amount of silica was 85 mass parts in the photocatalyst layer.

### Example B3:

The coated body sample was prepared in the same way as in Example B1, except that the amount of titanium oxide was 4 mass parts and the amount of silica was 96 mass parts in the photocatalyst layer.

### Example B4:

The coated body sample was prepared in the same way as in Example B1, except that the film thickness of the photocatalyst layer was 1.5 µm.

### Example B5 (Comparative):

The coated body sample was prepared in the same way as in Example B1, except that a triazole compound was used instead of the hydroxyphenyl triazine compound in the intermediate layer.

(1) Photocatalytic decomposition activity test (according to the same test method as the evaluation in Examples A1 to A6) and (2) long-term accelerated deterioration test by repeating the irradiation with a xenon lamp (wavelength 300 to 400 nm and irradiation intensity 80 W/m²) and spraying with 1% hydrogen peroxide were carried out for each sample obtained in Examples B1 to B5. The evaluation results are shown in Table 2. In addition, the evaluation criteria are as follows.

### (1) Decomposition activity

A: Q_{NOX} exceeds 2 times the standard of the Photocatalysis Industry Association of Japan (0.5 µmol).
B: Q_{NOX} is 1 to 2 times the standard of the Photocatalysis Industry Association of Japan.
C: Q_{NOX} does not satisfy the standard of the Photocatalysis Industry Association of Japan.

### (2) Long-term accelerated deterioration test (Degree of prevention of discoloration of the substrate)

OK: No discoloration is appreciated by visual observation.
NG: Discoloration is appreciated by visual observation.

**[Table 2]**

| Sample | Decomposition activity | Degree of prevention of discoloration of the substrate |
|---|---|---|
| Example B1 | B | OK |
| Example B2 | A | OK |
| Example B3 | B | OK |
| Example B4 | A | OK |
| Example B5 (Comparative) | B | NG |

### Examples C1 to C8

Preparation and evaluation of the coated body samples were carried out as follows.

### Example C1:

As the substrate, a glass substrate was prepared. The intermediate layer was formed on the substrate as below. That is, the substrate was spray-coated with the intermediate layer coating liquid comprising the silicone-modified acrylic resin dispersion, the silicon atom content of which was 10 mass % relative to the solid content of the silicone-modified resin, admixed with 1 mass % of the hydroxyphenyl triazine compound and 1 mass % of the hindered amine photostabilizer relative to the solid content of the dispersion, and dried at 120°C to form the intermediate layer of a thickness of 10 µm. The photocatalyst layer was formed on the resultant intermediate layer as below. That is, an anatase-type titanium oxide water dispersion with a copper compound added in the amount of 0.5 mass % in terms of CuO relative to TiO₂ (average particle diameter: about 50 nm), water dispersed colloidal silica (average particle diameter: about 30 nm, basic) and a polyether modified silicone-based surfactant were mixed to obtain the photocatalyst coating liquid. The total solid concentration of the photocatalyst and the inorganic oxide in the photocatalyst coating liquid was 5.5 mass %. The aforementioned intermediate layer-coated body which had been heated beforehand was spray-coated with the resultant photocatalyst coating liquid and dried at 120°C. Titanium oxide in the resultant photocatalyst layer was 2 mass parts, silica was 98 mass parts, and the surfactant was 6 mass parts. In addition, the film thickness of the photocatalyst layer was 0.5 µm.

### Example C2:

The coated body sample was prepared in the same way as in Example C1, except that the amount of titanium oxide was 15 mass parts and the amount of silica was 85 mass parts in the photocatalyst layer.

### Example C3:

The coated body sample was prepared in the same way as in Example C1, except that the amount of titanium oxide was 4 mass parts and the amount of silica was 96 mass parts in the photocatalyst layer.

### Example C4:

The coated body sample was prepared in the same way as in Example C1, except that the anatase-type titanium oxide water dispersion (average particle diameter: about 50 nm) with the copper compound added in the amount of 0.35 mass % in terms of CuO relative to TiO₂ and the silver compound added in the amount of 0.15 mass % in terms of Ag₂O relative to TiO₂ was used as titanium oxide.

### Example C5:

The coated body sample was prepared in the same way as in Example C2, except that the anatase-type titanium oxide water dispersion (average particle diameter: about 50 nm) with the copper compound added in the amount of 0.35 mass % in terms of CuO relative to TiO₂ and the silver compound added in the amount of 0.15 mass % in terms of Ag₂O relative to TiO₂ was used as titanium oxide.

### Example C6:

The coated body sample was prepared in the same way as in Example C3, except that the anatase-type titanium oxide water dispersion (average particle diameter: about 50 nm) with the copper compound added in the amount of 0.35 mass % in terms of CuO relative to TiO₂ and the silver compound added in the amount of 0.15 mass % in terms of Ag₂O relative to TiO₂ was used as titanium oxide.

### Example C7:

The coated body sample was prepared in the same way as in Example C1, except that the film thickness of the photocatalyst layer was 1.5 µm.

### Example C8 (Comparative):

The coated body sample was prepared in the same way as in Example C1, except that the triazole compound was used instead of the hydroxyphenyl triazine compound in the intermediate layer.

(1) Photocatalytic decomposition activity test (according to the same test method as the evaluation in Examples A1 to A6) and (2) long-term accelerated deterioration test by repeating the irradiation with a xenon lamp (wavelength 300 to 400 nm and irradiation intensity 80 W/m²) and spraying with 1% hydrogen peroxide were carried out for each sample obtained in Examples C1 to C8. The evaluation results are shown in Table 3. In addition, the evaluation criteria are as follows.

### (1) Decomposition activity

A: Q_{NOX} exceeds 2 times the standard of the Photocatalysis Industry Association of Japan (0.5 µmol).
B: Q_{NOX} is 1 to 2 times the standard of the Photocatalysis Industry Association of Japan.
C: Q_{NOX} does not satisfy the standard of the Photocatalysis Industry Association of Japan.

### (2) Long-term accelerated deterioration test (Degree of prevention of discoloration of the substrate)

OK: No discoloration is appreciated by visual observation.
NG: Discoloration is appreciated by visual observation.

**[Table 3]**

| Sample | Decomposition activity | Degree of prevention of discoloration of the substrate |
|---|---|---|
| Example C1 | B | OK |
| Example C2 | A | OK |
| Example C3 | B | OK |
| Example C4 | B | OK |
| Example C5 | A | OK |
| Example C6 | B | OK |
| Example C7 | A | OK |
| Example C7 (Comparative) | B | NG |

## Claims

1. A photocatalyst-coated body comprising a substrate, an intermediate layer provided on the substrate and a photocatalyst layer provided on the intermediate layer,
the photocatalyst layer comprising photocatalyst particles composed of metal oxide which is excited by ultraviolet light, and
the intermediate layer comprising a weather resistant resin and a hydroxyphenyl triazine compound.

2. The photocatalyst-coated body according to claim 1, wherein
a film thickness of the intermediate layer is 1 µm or more and 50 µm or less,
a film thickness of the photocatalyst layer is 0.1 µm or more and 5 µm or less, and
the film thickness of the intermediate layer is larger than the film thickness of the photocatalyst layer.

3. The photocatalyst-coated body according to claim 1 or 2, wherein the photocatalyst layer is formed by applying the coating liquid comprising a photocatalyst sol comprising photocatalyst particles composed of metal oxide which is excited by ultraviolet light and an amine and then drying.

4. The photocatalyst-coated body according to claim 1 or 2, wherein the photocatalyst layer further comprises copper element in ionic state.

5. The photocatalyst-coated body according to one of claims 1 to 4, wherein the content of the photocatalyst particles in the photocatalyst layer is 1 mass % or more and less than 20 mass %.

6. The photocatalyst-coated body according to one of claims 1 to 4, wherein the content of the photocatalyst particles in the photocatalyst layer is more than 1 mass % and less than 5 mass %.

7. The photocatalyst-coated body according to one of claims 1 to 6, wherein the intermediate layer further comprises a hindered amine compound.

8. The photocatalyst-coated body according to one of claims 1 to 7, wherein the weather resistant resin is a silicone-modified resin.

9. The photocatalyst-coated body according to claim 8, wherein the silicon content in the silicone-modified resin is 0.2 mass % or more and less than 16.5 mass %, relative to the solid content of the silicone-modified resin.

10. The photocatalyst-coated body according to one of claims 1 to 9, wherein the hydroxyphenyl triazine compound is comprised in an amount of 0.1 mass % or more and less than 10 mass % relative to the intermediate layer.

11. The photocatalyst-coated body according to one of claims 1 to 10, wherein the photocatalyst layer has air permeability.

12. The photocatalyst-coated body according to one of claims 1 to 11, wherein the photocatalyst layer further comprises inorganic oxide particles besides the photocatalyst particles.

13. The photocatalyst-coated body according to claim 12, wherein the photocatalyst layer comprises:
the photocatalyst particles in an amount of more than 1 mass part and less than 20 mass parts,
the inorganic oxide particles in an amount of more than 70 mass parts and less than 99 mass parts, and
at least one condensation-polymerization product selected from the group consisting of a condensation-polymerization product of hydrolyzable silicone and a condensation-polymerization product of hydrolyzed organometallic compound in an amount of 0 mass part or more and less than 10 mass parts,
so that the total amount of the photocatalyst particles, the inorganic oxide particles and the condensation-polymerization product in terms of the oxide is 100 mass parts.

14. The photocatalyst-coated body according to claim 12, wherein the photocatalyst layer comprises:
the photocatalyst particles in an amount of more than 1 mass part and less than 5 mass parts,
the inorganic oxide particles in an amount of more than 85 mass parts and less than 99 mass parts, and
at least one condensation-polymerization product selected from the group consisting of a condensation-polymerization product of hydrolyzable silicone and a condensation-polymerization product of hydrolyzed organometallic compound in an amount of 0 mass part or more and less than 10 mass parts,
so that the total amount of the photocatalyst particles, the inorganic oxide particles and the condensation-polymerization product in terms of the oxide is 100 mass parts.

15. The photocatalyst-coated body according to one of claims 1 to 14, wherein the substrate is an architectural material for exterior.
